# EUROPEAN PATENT SPECIFICATION

(11) **EP 1 352 814 B1**
(45) Date of publication and mention of the grant of the patent: **05.01.2005**
(21) Application number: 03077128.1
(22) Date of filing: 11.01.2001
(51) Int. Cl.: B62D 53/08, B62D 47/02, B61D 3/10

(54) **Coupling device for a trailer**
Anhängerkupplung
Accouplement pour remorque

(30) Priority: 13.01.2000 NL 1014074
(43) Date of publication of application: 15.10.2003
(62) Divisional of application: 01200075.8
(73) Proprietor: Transport Industry Development Centre B.V., 5692 GA Son en Breugel (NL)
(72) Inventor: Van Genugten, Antonius Jacobus, 5298 VK Liempde (NL)
(74) Representative: Valkonet, Rutger

(56) References cited:
- DE-C- 848 750
- FR-A- 2 348 092

## Description

The present invention relates to a coupling device for a trailer having steerable wheels, wherein the coupling device includes a coupling plate which is rotatable about the central axis of a coupling pin, which coupling plate is supported by a frame to be fixed to the trailer and which includes a driver element intended for cooperation with a part of a tractive unit by means of which the trailer can be moved, in such a manner that the coupling plate rotates along with the tractive unit upon rotation of the tractive unit and the trailer relative to each other about the central axis of the coupling pin and wherein a stud is fixed to the coupling plate in a point some distance away from the central axis of the coupling pin, about which stud an eye that forms part of a steering mechanism for the steerable wheels is rotatable.

The rotatable coupling plate of a trailer fitted with such a coupling device will be coupled to a steering mechanism for the steerable wheels. When a combination of such a trailer and a tractive unit moving the trailer is taking a bend, a relative rotation about the central axis of the coupling pin will take place between the tractive unit and the trailer. When such a relative rotation between the trailer and the tractive unit takes place, the coupling plate will rotate along with the tractive unit with respect to the trailer, thus pivoting the steerable wheels with respect to the chassis of the trailer via the steering mechanism. Said steerable wheels may be wheels which are each pivotable about an upwardly extending axis with respect to the chassis of the trailer, or wheels which are mounted on the ends of an axle which is pivotable about an upwardly extending axis with respect to the chassis of the trailer.

In the known structure described in a leaflet of the applicant "TD System with 4 Years Warranty" the movable parts of the structure are difficult accessible for repair and service.

According the invention said stud is fixed to the coupling plate by means of a bolt, which is accessible from the underside of the coupling device when said coupling device is mounted on a trailer.

The advantages of this structure consist in particular of the fact that maintenance can take place via the underside of the coupling device, independently of the type of trailer.

The invention will now be explained in more detail by means of a possible embodiment of the coupling device according to the invention as shown in the accompanying figures.
Figure 1 is a top plan view of a coupling device according to the invention.
Figure 2 is a side elevation of Figure 1, seen in the direction indicated by arrow II in Figure 1.
Figure 3 is a side elevation of Figure 1, seen in the direction indicated by arrow III in Figure 1.
Figure 4 is a bottom plan view of the coupling device of Figure 1, from which a few parts have been left out.
Figure 5 is a sectional view of the frame and of the rotatable coupling plate that is bearing-mounted in said frame.
Figure 6 is a larger-scale view of the right-hand part of Figure 5.
Figure 7 is an upside-down sectional view of the coupling of a coupling rod forming part of the steering mechanism for the steerable wheels.
Figure 8 is a sectional view corresponding to Figure 6 of an alternative embodiment.
Figure 9 is a sectional view comparable to Figure 8 of a second alternative embodiment.
Figure 10 is a sectional view corresponding to Figure 9 of a third alternative embodiment.

The coupling device that is shown in the figures comprises a frame 1 and a coupling plate 2 rotatably supported in said frame.

The frame 1, which has been cast from a suitable cast iron, has a substantially square outer circumference with bevelled corners. Frame 1 is built up in the main of a body 3 bounding a circular opening, which is circumferentially provided with a flange 4. The connection between body 3 and flange 4 is strengthened by means of ribs 5. Frame 1 is furthermore provided with holes 6 for the passage of bolts, by means of which the frame can be secured to the chassis (not shown) of a trailer.

A circumferential groove 7 of V-shaped section is formed in the wall of frame 1 that surrounds the circular opening bounded by the frame, wherein the two boundary surfaces 8 and 9 of said groove extend perpendicularly away from each other from a horizontal centre plane of he groove.

The rotatable coupling plate 2 comprises a disc-shaped part 10, the underside of which has been machined to bear on the coupling mounted on a tractive unit. Rotatable coupling plate 2 is provided with an upright round collar or flange 11, which is spaced from the outer circumference of said disc-shaped part 10 by some distance. The connection between disc 10 and flange 11 is strengthened by means of strengthening ribs 12.

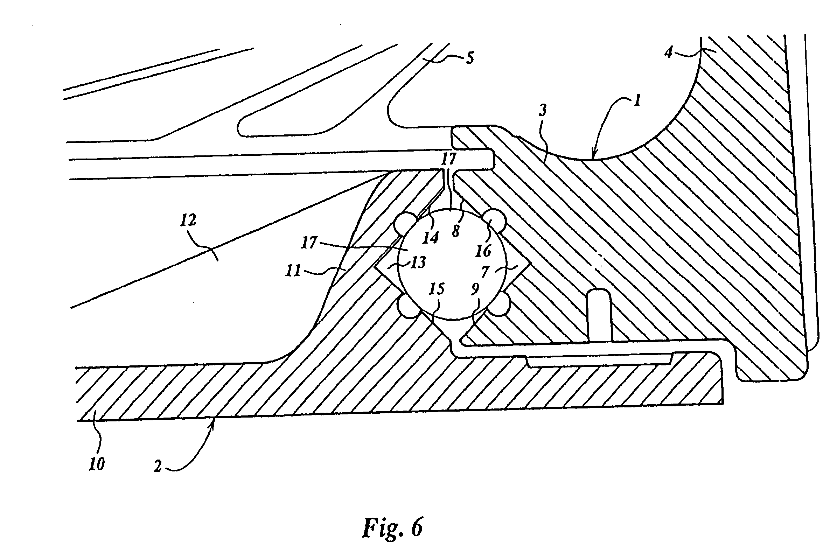

As will be apparent in particular from Figure 6, a circumferential groove 13 of V-shaped section is also formed in the outer circumference of upright collar 11, wherein the boundary surfaces 14 and 15 extending perpendicularly to each other extend obliquely away from each other from a horizontal centre plane in which both the top of the recess 13 and the top of recess 7 are located.

Circumferential grooves may be formed in the boundary surfaces 8, 9, 14 and 15, into which rings 16 made of a hard material, for example hardened steel, can be placed. In that case said rings 16 form the contact surfaces for balls 17, which are present in the circular chamber formed by recesses 7 and 13. It will be understood that the construction is such that the outer circumference of collar 11 is disposed some distance away from the wall portion of frame 1 that surrounds the circular opening that is formed in the frame, so as to enable free rotation of the coupling plate 2 in frame 1. Since the disc-shaped part 10 of the coupling plate extends beyond the chamber formed by grooves 7 and 13 in which the balls 17 are accommodated, seen from the centre of coupling plate 2, a certain degree of screening of said chamber is effected as well.

The balls can be introduced into the chamber formed by recesses 7 and 13 through a closable opening that is locally formed in the frame and/or in the coupling plate.

It will be understood that balls 17 enable an effective connection between the frame and the coupling plate, whilst the coupling plate is readily rotatable about its central axis with respect to the frame.

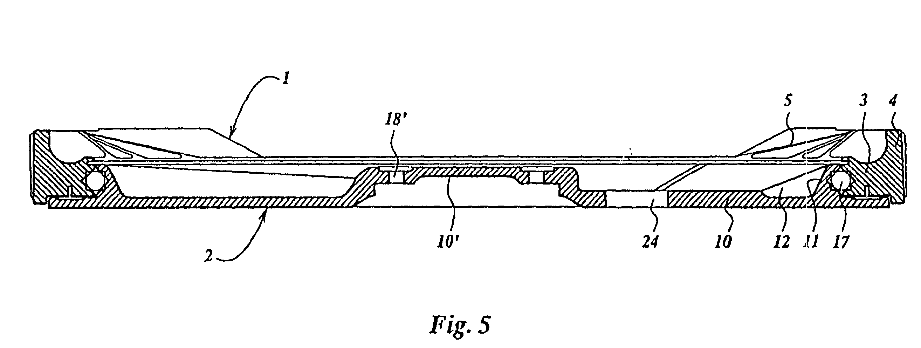

As is apparent in particular from Figure 5, the disc-shaped member includes a cup-shaped part 10' near its centre, which functions to receive the upper end of a coupling pin 18, which can be fixed to the rotatable coupling plate 1 by means of bolts to be passed through holes 18' formed in the cup-shaped part 10'. Said coupling pin 18 functions, in a manner which is known per se, to provide the connection between the coupling device that is fixed to a trailer and the coupling plate that is mounted on a tractive unit.

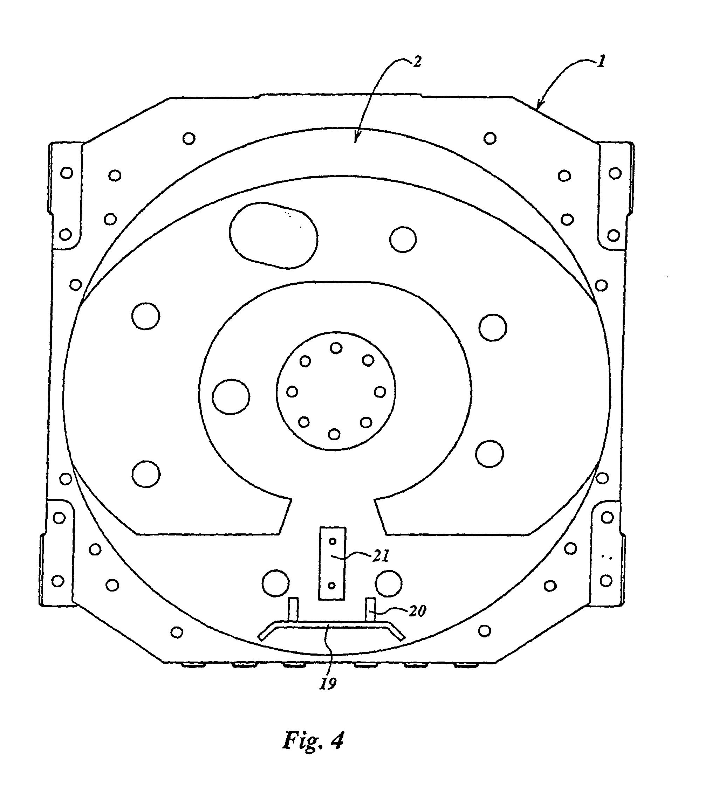

As is furthermore shown in Figure 4, an upright strip 19 is fixed to the underside of coupling plate 2, which strip has bent ends.

In the central position of the coupling plate 2, that is, the position which the coupling plate 2 occupies when a combination of a tractive unit and a trailer is driven straight ahead, strip 19 extends perpendicularly to the intended direction of movement of the combination, whilst the ends of the strip are bent rearwards, seen in the direction of movement. Two pins 20 extending parallel to each other in forward direction are connected to said strip. Furthermore a sliding plate 21 is welded to the underside of the coupling plate 19.

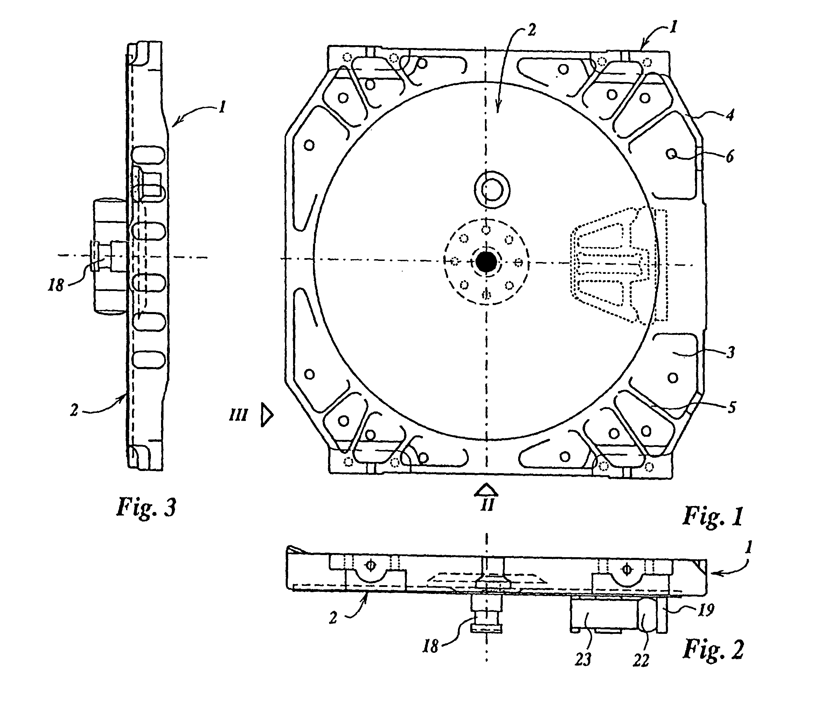

As is furthermore shown in particular in Figure 2, rubbers buffers 22 are passed over pins 20. Said rubber buffers 22 are disposed between the strip 19 and a trapezoidal, seen in top plan view, body 23 present on the underside of the coupling plate 2, which body is supported on the sliding plate 21 whilst being capable of slight sliding movement thereon. As is known per se, said trapezoidal body 23 is retained between two boundary walls of an opening formed in the coupling plate of the tractive unit when a trailer fitted with such a coupling device is coupled to a tractive unit. Consequently, the coupling plate 2 is rotated along with the coupling plate of the tractive unit via body 23 upon rotation of the tractive unit and the trailer relative to each other about the central axis of the coupling pin 18, for example when taking a bend. So body 23 acts as a driver element for the rotatable coupling plate.

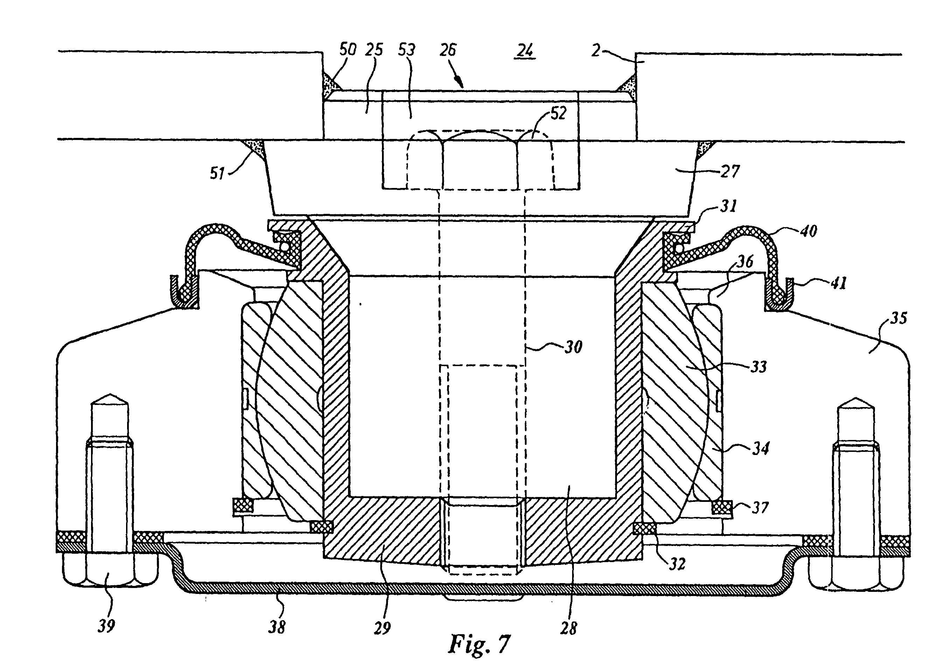

In the following description of Figure 7, relative concepts such as up and down are to be interpreted as seen in the representation of Figure 7. In practice the coupling according to Figure 7 will be used upside down.

A hole 24 is formed in the coupling plate at a location some distance away from coupling pin 18, in which hole the upper end 25 of a disc 26 is accommodated (Figure 7). The lower part 27 of disc 26, which has a larger diameter than the part 25 of disc 26, abuts against the underside of coupling plate 2 thereby. Disc 26 is welded to the coupling plate by means of circumferential welds 50, 51.

A stud 28 is disposed under disc 26. Stud 28 is surrounded by a bush 29 of U-shaped section, which is secured to disc 26 together with stud 28 by means of a bolt 30 that is passed through said stud, the threaded lower part of which is screwed into a threaded hole formed in bush 29. In principle disc 26 and stud 28 may also be integral with each other. Head 52 of bolt 30 is accessible via hole 24 and recess 53 in disc 26, on the bottom of which head 52 is clamped down.

Bush 29 is provided with a shoulder 31 at its upper end. A ring 33 is retained between the lower surface of shoulder 31 and a locking ring 32 disposed in a circumferential groove formed near the lower end of the bush, which ring is connected to the bush by a press fit. As appears from Figure 7, the outer circumference of ring 33 is in the form of a circular arc, seen in sectional view.

Ring 33 is surrounded by a further ring 34, whose inner circumference is adapted to the outer circumference of ring 33. Ring 34 is capable of rotating and also, to a limited degree, reciprocating movement with respect to ring 33. Rings 33 and 34 together form a pivot bearing, therefore. Ring 34 is accommodated in a bore that is formed in an eye-shaped part 35, which is fixed to the end of a coupling rod (not shown in the figures). Ring 34 is thereby retained between a shoulder 36 projecting into the bore of the eye 35 near the upper side thereof and a locking ring 37, which is accommodated in a grooved formed in the bore in said eye. The bore formed in eye 35 is closed at the bottom side by a cover plate 38, which is secured to the eye 35 by means of bolts 29.

A circumferential groove is formed in shoulder 31, in which groove an edge of a bellows 40 consisting of a resilient material is accommodated. Said bellows extends from the groove formed in shoulder 31 over the opening formed in eye 35, and at its outer circumference it is clamped down in a U-shaped, circular, gutter-shaped member 41 mounted on eye 35. It will be apparent that the rings 33 and 34 forming bearing cups are thus protected against penetrating dirt and the like. The space between cover plate 38 and bellows 40 is permanently filled with a lubricant, so that refilling with lubricant is not necessary.

As described above, coupling plate 2 rotates about the central axis of coupling pin 18 when a combination of a tractive unit and a trailer that is fitted with a coupling device according to the invention takes a bend. It will be apparent that stud 28 thereby moves in a path that extends concentrically about the central axis of coupling pin 18, so that a coupling rod, sliding member or the like that is connected to eye 35 will more or less be moved reciprocatingly in the longitudinal direction of the combination. Such a coupling rod or sliding member will be coupled to a steering mechanism of known construction for steerable wheels of the trailer, in a manner which is known per se, or form part thereof.

As a result of the above-described coupling of the eye 35, which forms part of a sliding member, coupling rod or the like, the stud 28 and the eye 35 surrounding said stud and the coupling rod or the like connected thereto can be detached from the coupling device by unscrewing the bolt 30 which is accessible from the underside of the coupling device, and be moved out from its position between the coupling device and the part of the chassis trailer present above said coupling device. This is a significant improvement in comparison with the constructions that have been usual so far, which generally had to be detached from above, with the concomitant drawback that it was very difficult to gain access to the upper side of the coupling device in the mounted position of the coupling device on a trailer.

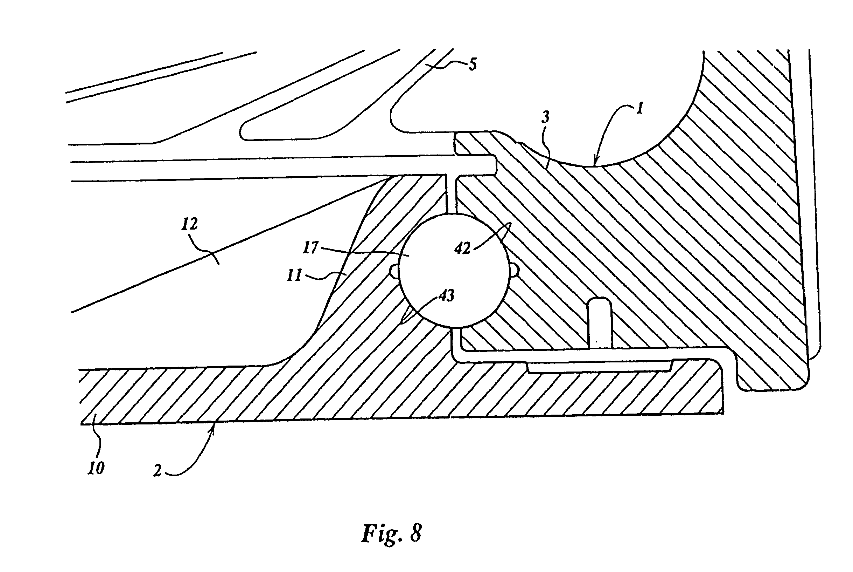

Figure 8 shows an alternative embodiment. In Figure 8 those parts that correspond to the parts used in the above-described embodiment are indicated by the same numerals as in the preceding figures.

In this embodiment grooves are formed in the frame 1 and in the upright collar 11 of coupling plate 2, whose boundary surfaces 42 and 43, respectively, are adapted to the shape of the balls 17, wherein said boundary surfaces function as bearing faces that mate with said balls.

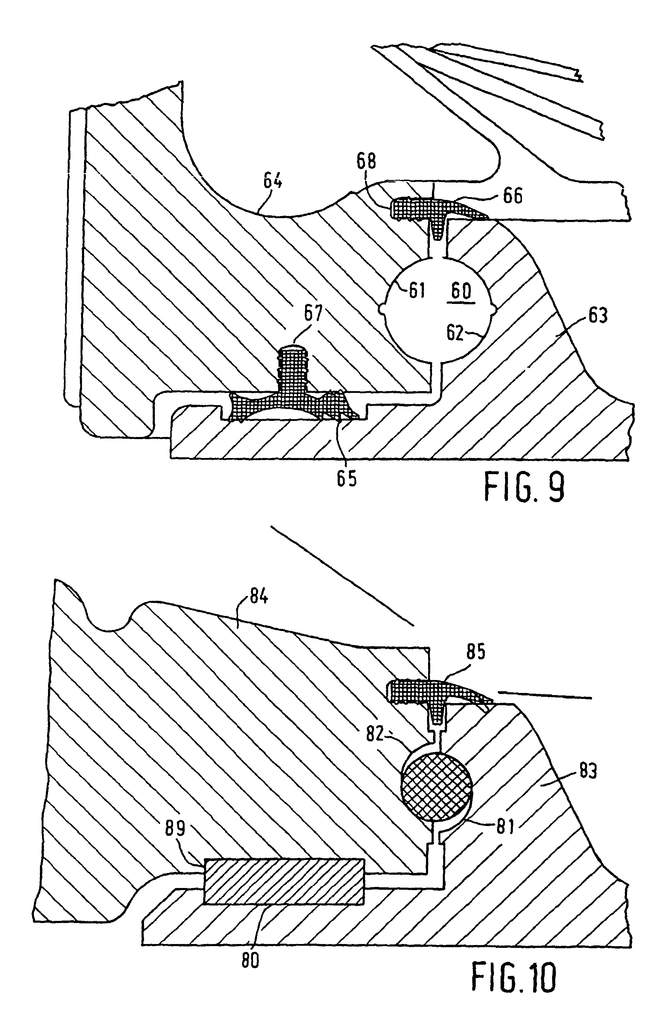

Figure 9 shows another alternative embodiment, in this case including the sealing means that are required for sealing the area surrounding the circular chamber 60 that is defined by semicircular grooves 61, 62 in coupling plate 63 and frame 64, respectively. The sealing means are made up of a first sealing ring 65 and a second sealing ring 66. The two sealing rings 65, 66 extend in substantially rectangular circumferential grooves 67, 68 in frame 64. Coupling plate 63 is also provided with a relatively flat recess 69 for accommodating first sealing ring 65.

In yet another alternative embodiment, which is shown in Figure 10, a bearing ring 80 is used instead of sealing ring 65, which bearing ring is capable of bearing at least part of the vertical load on the coupling. Grooves 81, 82 in coupling plate 83 and frame 84, respectively, are disposed at vertically different positions with a view to compensating the inevitable wear on bearing ring 80 during use. The properties of sealing ring 85 are such that it will also retain its sealing characteristics after wear on bearing ring 80. A relatively flat recess 89 is formed not only in coupling plate 83, but also in frame 84 in this embodiment for the purpose of accommodating bearing ring 80. Both the sealing rings 65, 66, 85 and the bearing ring 80 in Figures 9 and 10 may be made of a suitable plastic material or another conductive material, such as bronze or glass fibre-containing material, wherein the upper side of bearing ring 80 may furthermore be provided with a wearing layer. Thanks to the bearing function of bearing ring 80, balls 90 will be loaded less heavily.

## Claims

1. A coupling device for a trailer having steerable wheels, wherein the coupling device includes a coupling plate (2) which is rotatable about the central axis of a coupling pin (18), which coupling plate (2) is supported by a frame (1) to be fixed to the trailer and which includes a driver element (23) intended for cooperation with a part of a tractive unit by means of which the trailer can be moved, in such a manner that the coupling plate (2) rotates along with the tractive unit upon rotation of the tractive unit and the trailer relative to each other about the central axis of the coupling pin (18) and wherein a stud (28) is fixed to the coupling plate (2) in a point some distance away from the central axis of the coupling pin (18), about which stud (28) an eye (35) that forms part of a steering mechanism for the steerable wheels is rotatable, **characterized in that** said stud (28) is fixed to the coupling plate (2) by means of a bolt (30), which is accessible from the underside of the coupling device when said coupling device is mounted on a trailer.

2. Coupling device according to claim 1, **characterized in that** said stud (28) is surrounded by a bush (29), which bush (29) has a bottom extending over said stud (28) on its side remote from the coupling plate (2), which bottom is provided with a threaded hole into which the threaded end of said bolt (30) is screwed.

3. Coupling device according to claim 2, **characterized in that** a bearing (33, 34) is mounted between the inner circumference of said eye (35) and the outer circumference of said bush (29).

4. Coupling device according to claim 2 or 3, **characterized in that** the space in the eye (35) that accommodates said stud (28) and said bush (29) is sealed on the side remote from the coupling plate (38) by means of a cover plate (38) that is fixed to said eye (35).

5. Coupling device according to any one of the preceding claims 2 - 4, **characterized in that** the space within the eye (35), which accommodates said stud (28) and said bush (29), is closed on the side facing towards the coupling plate by means of a bellows-shaped member (40), which extends between the eye (35) and the bush (29) surrounding the outer circumference of the stud (28).

## Patentansprüche

1. Anhängerkupplung für einen Anhänger mit lenkbaren Rädern, wobei die Anhängerkupplung eine Kupplungsplatte (2) umfasst, welche µm die Mittelachse eines Kupplungsstifts (18) drehbar ist, welche Kupplungsplatte (2) durch einen Rahmen (1) getragen wird, der an den Anhänger befestigt wird und ein Antriebselement (23) umfasst, das zum gemeinsamen Betrieb mit einem Teil einer Zugeinheit, mit der der Anhänger bewegt werden kann, bestimmt ist, in solch einer Weise, dass sich die Kupplungsplatte (2) zusammen mit der Zugeinheit bei der Drehung der Zugeinheit und des Anhängers im Verhältnis zueinander um die Mittelachse des Kupplungsstifts (18) dreht, und wobei ein Zapfen (28) an der Kupplungsplatte (2) an einem Punkt in einiger Distanz von der Mittelachse des Kupplungsstifts (18) entfernt befestigt wird, um welche ein Auge (35), das einen Teil einer mechanischen Lenkvorrichtung für die lenkbaren Räder bildet, drehbar ist, **dadurch gekennzeichnet, dass** der Zapfen (28) an der Kupplungsplatte (2) durch einen Bolzen (30) befestigt ist, der von der Unterseite der Anhängerkupplung zugänglich ist, wenn die Anhängerkupplung auf einem Anhänger befestigt ist.

2. Anhängerkupplung nach Anspruch 1, **dadurch gekennzeichnet, dass** dieser Zapfen (28) von einer Buchse (29) umgeben ist, wobei die Buchse (29) einen unteren Teil bzw. Boden hat, der sich über den Zapfen (28) an seiner von der Kupplungsplatte (2) entfernten Seite ausbreitet, wobei der untere Teil über ein Gewindeloch verfügt, in dem das Gewindeende des Bolzens (30) verschraubt ist.

3. Anhängerkupplung nach Anspruch 2, **dadurch gekennzeichnet, dass** ein Lager (33, 34) zwischen dem inneren Umfang dieses Auges (35) und dem äußeren Umfang dieser Buchse (29) befestigt ist.

4. Anhängerkupplung nach Anspruch 2 oder 3, **dadurch gekennzeichnet, dass** der Raum im Auge (35), der den Zapfen (28) und die Buchse (29) aufnimmt, auf der von der Kupplungsplatte (38) entfernten Seite durch eine Abdeckplatte (38), die an dem Auge (35) befestigt ist, verschlossen ist.

5. Anhängerkupplung nach einem der vorhergehenden Ansprüche 2 - 4, **dadurch gekennzeichnet, dass** der Raum innerhalb des Auges (35), das den Zapfen (28) und die Buchse (29) aufnimmt, auf der Seite, die der Kupplungsplatte zugerichtet ist, geschlossen ist durch ein Element mit der Form eines Balgs (40), welches sich ausbreitet zwischen dem Auge (35) und der Buchse (29), die den äußeren Umfang des Zapfens (28) umgibt.

## Revendications

1. Dispositif de couplage pour une remorque possédant des roues orientables, dispositif de couplage qui comporte une plaque de couplage (2) qui peut tourner autour de l'axe central d'une broche de couplage (18) , laquelle plaque de couplage (2) est supportée par un châssis (1) à fixer à la remorque et qui comporte un élément de commande (23) conçu pour coopérer avec une partie d'une unité de traction au moyen de laquelle la remorque peut être déplacée, de telle manière que la plaque de couplage (2) tourne avec l'unité de traction lors de la rotation de l'unité de traction et la remorque l'une par rapport à l'autre autour de l'axe central de la broche de couplage (18) et dans lequel un goujon à épaulement (28) est fixé à la plaque de couplage (2) en un point distant de l'axe central de la broche de couplage (18), goujon à épaulement (28) autour duquel un oeillet (35) qui fait partie d'un mécanisme de guidage destiné aux roues orientables peut tourner, **caractérisé en ce que** ledit goujon à épaulement (28) est fixé à la plaque de couplage (2) au moyen d'un boulon (30), lequel est accessible par le dessous du dispositif de couplage lorsque ledit dispositif de couplage est monté sur une remorque.

2. Dispositif de couplage selon la revendication 1, **caractérisé en ce que** ledit goujon à épaulement (28) est entouré d'un manchon (29), manchon (29) qui possède un fond s'étendant sur ledit goujon à épaulement (28) sur son côté distant de la plaque de couplage (2) lequel fond est pourvu d'un trou taraudé dans lequel l'extrémité filetée dudit boulon 30 est vissée.

3. Dispositif de couplage selon la revendication 2, **caractérisé en ce qu'**un palier (33, 34) est monté entre la circonférence intérieure dudit oeillet (35) et la circonférence extérieure dudit manchon (29).

4. Dispositif de couplage selon la revendication 2 ou 3, **caractérisé en ce que** l'espace de l'oeillet (35) qui reçoit ledit goujon à épaulement (28) et ledit manchon (29) est fermé de façon étanche sur le côté distant de la plaque de couplage (38) au moyen d'une plaque de couverture (2) qui est fixée audit oeillet (35).

5. Dispositif de couplage selon l'une quelconque des revendications précédentes 2 à 4, **caractérisé en ce que** l'espace à l'intérieur dudit oeillet (35), qui reçoit ledit goujon à épaulement (28) et ledit manchon (29), est fermé sur le côté tourné vers la plaque de couplage au moyen d'un élément en forme de soufflet (40) qui s'étend entre l'oeillet (35) et le manchon (29) entourant la circonférence extérieure du goujon à épaulement (38).
